# EUROPEAN PATENT APPLICATION

(11) **EP 4 417 549 A1**
(43) Date of publication of application: **21.08.2024**
(21) Application number: 24156721.3
(22) Date of filing: 09.02.2024
(51) Int. Cl.: B65G 17/46, B65G 23/00, B65B 3/00

(54) **HAND CRANK FOR A FOLDING APPARATUS, FOLDING APPARATUS HAVING A HAND CRANK AND PACKAGING MACHINE HAVING A FOLDING APPARATUS**

(30) Priority: 15.02.2023 IT 202300002580
(71) Applicant: Tetra Laval Holdings & Finance S.A., 1009 Pully (CH)
(72) Inventor: CASSANI, Stefano, 41123 Modena (IT); RIMONDI, Fabrizio, 41123 Modena (IT); REIS, Monica, 41123 Modena (IT); ROCCHI, Manuel, 41123 Modena (IT); PRAMPOLINI, Demis, 41123 Modena (IT)
(74) Representative: Tetra Pak - Patent Attorneys SE

(57) **Abstract**

There is described a hand crank (35) for a folding apparatus (11). The hand crank (35) is configured to be operatively connected to a conveying device (23) of the folding apparatus (11) so as to enable a manual actuation of advancement of retaining seats (22) of the folding apparatus (11). The hand crank (35) comprises a connecting shaft (36) configured to be operatively connected to the conveying device (23), being rotatable about a rotation axis (B) and being configured to enable the manual actuation of the advancement of the retaining seats (22), a gripping element (37) connected to the connecting shaft (36) and configured to be gripped by a technical operator and enabling to actuate rotation of the connecting shaft (36) about the rotation axis (B) and a safety element (43) fixed to the connecting shaft (36) and having one or more indentations (44). Each indentation (44) is configured to receive a safety member (46) of the folding apparatus (11), such that with the safety member (46) being inserted into one of the indentations (44) rotation of the connecting shaft (36) about the rotation axis (B) is blocked.

## Description

### TECHNICAL FIELD

The present invention relates to a hand crank for a folding apparatus configured to fold semi-finalized packs of a pourable product, preferentially a pourable food product, into finalized packages of the pourable product, preferentially the pourable food product.

The present invention also relates to a folding apparatus for folding semi-finalized packs of a pourable product, preferentially a pourable food product, into finalized packages of the pourable product, preferentially the pourable food product.

Advantageously, the present invention also relates to a packaging machine for packaging a pourable product, preferentially a pourable food product, into finalized packages and having a folding apparatus for folding semi-finalized packs into the finalized packages.

### BACKGROUND ART

As is known, many liquid or pourable food products, such as fruit juice, UHT (ultra-high-temperature treated) milk, wine, tomato sauce, etc., are sold in packages made of sterilized packaging material.

A typical example is the parallelepiped-shaped package for pourable food products known as Tetra Brik Aseptic (registered trademark), which is made by sealing and folding a laminated packaging material. The packaging material has a multilayer structure comprising a carton and/or paper base layer, covered on both sides with layers of heat-seal plastic material, e.g. polyethylene. In the case of aseptic packages for long-storage products, the packaging material also comprises a layer of oxygen-barrier material, e.g. an aluminum foil, which is superimposed on a layer of heat-seal plastic material, and is in turn covered with another layer of heat-seal plastic material forming the inner face of the package eventually contacting the food product.

Packages of this sort are normally produced on fully automatic packaging machines.

There are known packaging machines that advance a web of packaging material through a sterilization apparatus for sterilizing the web of packaging material and into an isolation chamber in which the sterilized web of packaging material is maintained and advanced. During advancement of the web of packaging material within the isolation chamber, the web of packaging material is folded and sealed longitudinally to form a tube, the tube being further fed along an (vertical) advancing direction. In order to complete the forming operations, the tube is filled with a pourable product, in particular a pourable food product, and is transversally sealed and subsequently cut along equally spaced transversal cross sections during advancement along the advancing direction. Pillow packages are so obtained. These pillow packages define sealed semi-finalized packs having each a central main body, two sealing fins resulting from the transversal sealing and cutting of the tube and protruding from the respective central main body and a plurality of flaps laterally protruding from the central main body. In order to obtain the finalized packages, the pillow packages are further formed and the sealing fins and the flaps are folded and sealed onto the respective central main bodies.

A typical packaging machine of this type comprises:
- a forming apparatus configured to form the semi-finalized packs being filled with the pourable product; and
- a folding apparatus configured to receive the semi-finalized packs from the forming apparatus and to form the finalized packages from the semi-finalized packs.

A typical folding apparatus comprises a plurality of retaining seats for retaining the semi-finalized packs (and finally the finalized packages) and a conveying device for advancing the retaining seats along an advancement path.

Moreover, the folding apparatus may comprise a plurality of treatment devices, e.g. arranged at different treatment stations, and configured to manipulate the semi-finalized packs so as to obtain the finalized packages. The treatment devices may be arranged along the advancement path.

One kind of folding apparatus comprises an endless chain having a plurality of chain elements and each retaining seat is defined by a couple of retaining elements, each retaining element being coupled to one respective chain element.

Moreover, the conveying device is configured to advance the chain so as to advance the retaining seats.

During e.g. maintenance activities (i.e. when the conveying device is deactivated) it may be necessary to manually change the position of the retaining seats along the advancement path. Therefore, the folding apparatus also comprises a hand crank, which can be removably connected to the conveying device so as to manually advance the retaining seats along the advancement path.

The hand crank comprises a connecting shaft configured to be operatively connected to the conveying device. The connecting shaft is rotatable about a rotation axis so that the hand crank enables a manual actuation of the advancement of the retaining seats along the advancement path by rotating the connecting shaft about the rotation axis. The hand crank also comprises a gripping element connected to the connecting shaft and configured to be gripped by a technical operator and enabling to actuate rotation of the connecting shaft about the rotation axis.

Even though the known hand cranks and folding apparatuses work satisfyingly well, there is a need felt in the sector to further improve the known hand cranks and folding apparatuses.

### DISCLOSURE OF INVENTION

It is therefore an object of the present invention to provide an improved hand crank.

It is therefore a further object of the present invention to provide an improved folding apparatus.

It is an even further object of the present invention to provide an improved packaging machine.

According to the present invention, there is provided a hand crank according to claim 1.

Preferred embodiments are claimed in the dependent claims.

According to the present invention, there is also provided a folding apparatus according to any one of claims 9 to 14.

According to the present invention, there is also provided a packaging machine according to claim 15.

### BRIEF DESCRIPTION OF THE DRAWINGS

A non-limiting embodiment of the present invention will be described by way of example with reference to the accompanying drawings, in which:
Figure 1 is a schematic view of a packaging machine having a folding apparatus according to the present invention, with parts removed for clarity;
Figures 2 is an enlarged perspective view of the folding apparatus of Figure 1, with parts removed for clarity;
Figure 3 is a further enlarged perspective view of the folding apparatus of Figure 2 with further removed parts;
Figure 4 is an enlarged perspective view of details of a hand crank according to the present invention, with parts removed for clarity; and
Figure 5 is a perspective side view of the hand crank of Figure 4, with parts removed for clarity.

### BEST MODES FOR CARRYING OUT THE INVENTION

Number 1 indicates as a whole a packaging machine for producing, preferentially sealed, finalized packages of a pourable product, preferentially a pourable food product such as pasteurized milk, fruit juice, wine, tomato sauce, yoghurt, milk drinks, yoghurt drinks, emulsions, beverages with pulp, salt, sugar and the like.

Preferentially, the packages may be formed from a multilayer packaging material. Even more preferentially, the packages may be formed from a web of packaging material 2.

More specifically, the multilayer packaging material, preferentially web of packaging material 2, may comprise at least a layer of fibrous material, such as e.g. a paper or cardboard layer, and at least two layers of heat-seal plastic material, e.g. polyethylene, interposing the layer of fibrous material in between one another. One of these two layers of heat-seal plastic material may define the respective inner face of the finalized packages eventually contacting the pourable product.

According to some possible non-limiting embodiments, the multilayer packaging material, preferentially web of packaging material 2, may also comprise a layer of gas- and light-barrier material, e.g. aluminum foil or ethylene vinyl alcohol (EVOH) film, preferentially being arranged between one of the layers of the heat-seal plastic material and the layer of fibrous material. Preferentially, the multilayer packaging material, preferentially web of packaging material 2, may also comprise a further layer of heat-seal plastic material being interposed between the layer of gas- and light-barrier material and the layer of fibrous material.

Preferentially, each finalized package may have a substantially parallelepiped structure.

According to some possible non-limiting embodiments, each finalized package may also comprise an opening device, such as a closure or a lid.

The finalized packages are obtained from manipulation of semi-finalized packs 3.

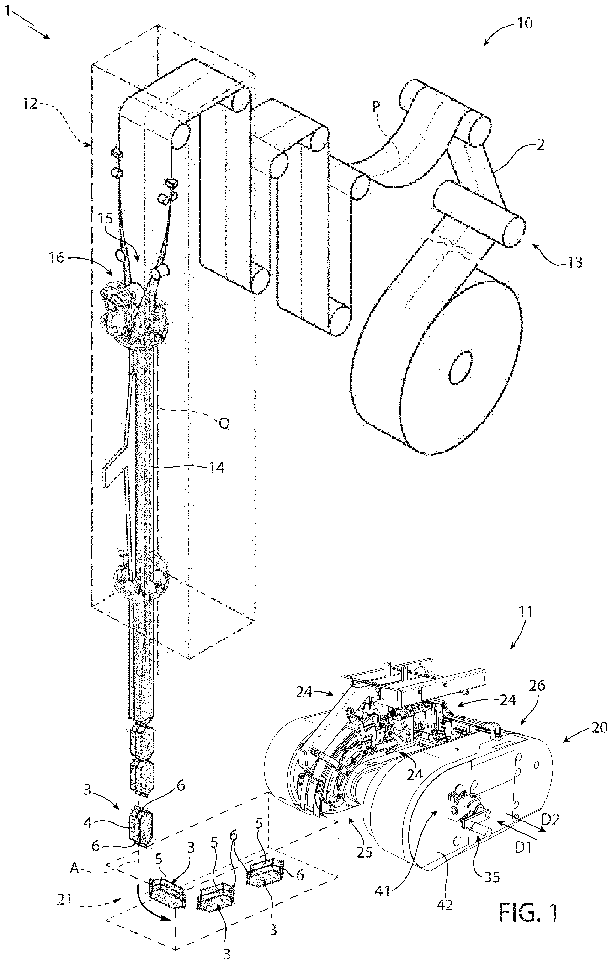

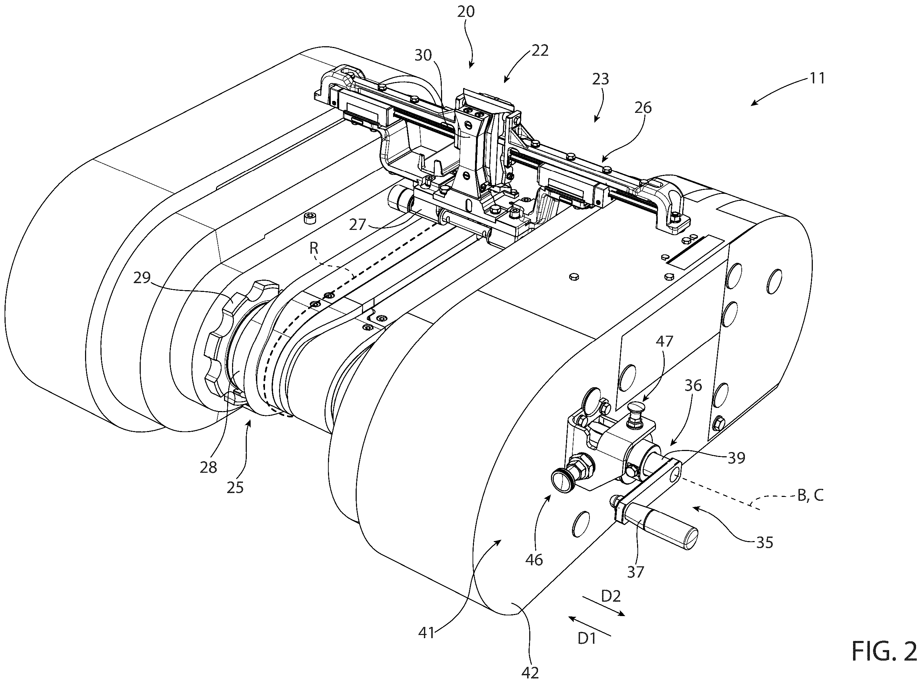

With particular reference to Figures 1 and 2, packaging machine 1 may be configured to produce (sealed) semi-finalized packs 3, such as e.g. pillow packs, being filled with the pourable product and to further treat and/or manipulate and/or form semi-finalized packs 3 for obtaining the finalized packages.

In more detail, each semi-finalized pack 3 may extend along a respective longitudinal axis A, and preferentially may comprise a longitudinal sealing band 4 (extending along and/or being parallel to longitudinal axis A).

Each semi-finalized pack 3 may comprise a central main body 5, one or more flaps protruding away, preferentially laterally protruding away, from the respective central main body 5 and one or more transversal sealing fins 6, preferentially transversal to longitudinal axis A.

In further detail, each sealing fin 6 may be arranged at a respective end portion of the respective semi-finalized pack 3.

Preferentially, each semi-finalized pack 3 may comprise at least two transversal sealing fins 6, preferentially transversal to longitudinal axis A, arranged at respective end portions of the respective semi-finalized pack 3 opposite to one another.

Moreover, each sealing fin 6 may define a respective transversal sealing fin of the respective finalized package (obtained from the respective semi-finalized pack 3).

According to some preferred non-limiting embodiments, each sealing fin 6 may protrude from the respective central main body 5 along a direction parallel to the respective longitudinal axis A.

According to some preferred non-limiting embodiments, each longitudinal sealing band 4 may define a corresponding longitudinal seam portion of the respective finalized package (obtained from the respective semi-finalized pack 3) .

Preferentially, each flap may carry a portion of a respective sealing fin 6.

According to some preferred non-limiting embodiments, each semi-finalized pack 3 may comprise at least two respective flaps laterally extending from opposite lateral sides of the respective central main body 5. In even further detail, each semi-finalized pack 3 may comprise at least four respective flaps defining two respective pairs of flaps.

With particular reference to Figure 1, packaging machine 1 may comprise at least:
- a forming apparatus 10 configured to form and/or obtain semi-finalized packs 3 of the pourable product, preferentially from the multilayer packaging material, more preferentially from the web of packaging material 2; and
- a folding apparatus 11 configured to receive the semi-finalized packs 3 from forming apparatus 10 and to form the finalized packages of the pourable product from semi-finalized packs 3.

In more detail, forming apparatus 10 may comprise:
- an isolation chamber 12 configured to separate an inner (sterile) environment from an outer (hostile) environment;
- a conveying unit 13 configured to advance web of packaging material 2 along a web advancement path P at least to a tube forming station at which web of packaging material 2 is formed, in use, into a tube 14 and for advancing tube 14 along a tube advancement path Q;
- a tube forming and sealing device 15 at least partially arranged within isolation chamber 12 and configured to form and longitudinally seal tube 14 at the tube forming station within isolation chamber 12;
- a filling device 16 for filling tube 14 with the pourable product; and
- a pack forming unit configured to at least form and transversally seal tube 14, preferentially to also transversally cut tube 14, preferentially during advancement of tube 14 along tube advancement path Q, for obtaining and/or producing semi-finalized packs 3.

Preferentially, each sealing fin 6 may result from the transversal sealing and cutting of tube 14.

Preferentially, the pack forming unit may be arranged downstream of isolation chamber 12 and tube forming and sealing device 15 along tube advancement path Q.

Moreover, tube 14 may extend along a longitudinal axis, preferentially having a vertical orientation.

Furthermore, packaging machine 1 may further comprise a sterilization apparatus for sterilizing at least a portion of web of packaging material 2 at a sterilization station arranged upstream of the tube forming station along web advancement path P.

According to some preferred non-limiting embodiments, the pack forming unit may comprise:
- a plurality of pairs of at least one operative assembly (not shown and known as such) and at least one respective counter-operative assembly (not shown and known as such); and
- a conveyor unit (not shown and known as such) configured to advance the operative assemblies and the respective counter-operative assemblies along respective conveying paths.

With particular reference to Figure 1, folding apparatus 11 may comprise at least a folding unit 20 configured to obtain the finalized packages from the respective semi-finalized packs 3, and preferentially an infeed conveyor 21 configured to advance semi-finalized packs 3, preferentially from forming apparatus 10, to folding unit 20.

In more detail, infeed conveyor 21 may be interposed between folding unit 20 and forming apparatus 10 and may be configured to receive semi-finalized packs 3 from forming apparatus 10 and to feed semi-finalized packs 3 to folding unit 20.

With particular reference to Figures 1 to 3, folding apparatus 11, in particular folding unit 20, may comprise:
- a plurality of retaining seats 22 (only one shown), each one configured to receive one respective semi-finalized pack 3 at a time; and
- a conveying device 23 configured to advance retaining seats 22 along an advancement path R, preferentially an endless advancement path R.

Preferentially, folding apparatus 11, in particular folding unit 20, may be configured to manipulate semi-finalized packs 3 so as to form the finalized packages during advancement of retaining seats 22 along advancement path R.

In more detail, in use, each semi-finalized pack 3 may be folded into the respective finalized package while being retained within the respective retaining seat 22 and during advancement of the respective retaining seat 22 along the advancement path R.

Moreover, folding apparatus 11, in particular folding unit 20, comprises one or more treatment devices 24 (only partially shown) configured to manipulate semi-finalized packs 3 so as to obtain the finalized packages.

The one or more treatment devices 24 may be configured to fold sealing fins 6 and the flaps and to seal the sealing fins 6 and the flaps onto the respective central main bodies 5.

Preferentially, folding apparatus 11, in particular folding unit 20, may comprise a plurality of treatment devices 24 and each one is configured to execute at least one respective treatment. More preferentially, treatment devices 24 may be arranged along advancement path R.

In more detail, conveying device 23 may be configured to advance retaining seats 22 through an inlet station 25 at which semi-finalized packs 3 are fed into the respective retaining seats 22 and a discharge station 26 at which the respective finalized packages are discharged from the respective retaining seats 22.

According to some preferred non-limiting embodiments, each retaining seat 22 may comprise at least two retaining elements 30 (only one being visible), such as e.g. retaining plates, spaced apart from one another. Preferentially, a space defined between the respective retaining elements 30 of each retaining seat 22 is configured to receive a respective semi-finalized pack 3.

According to some preferred non-limiting embodiments, conveying device 23 may comprise an endless chain having a plurality of chain elements 27 (only one shown). Preferentially, each retaining element 30 may be connected to and/or carried by one respective chain element 27.

Moreover, conveying device 23 may be configured to advance the endless chain, in particular the plurality of chains elements 27, so as to advance retaining seats 22 along advancement path R.

According to some preferred non-limiting embodiments, conveying device 23 may comprise an actuator, e.g. and electrical motor, operatively coupled to retaining seats 22, preferentially the respective retaining elements 30, and configured to actuate advancement of retaining seats 22, preferentially the respective retaining elements 30, along advancement path R.

Preferentially, the actuator is connected to the endless chain so as to actuate advancement of the endless chain, which in turn leads to advancement of retaining seats 22, preferentially the respective retaining elements 30.

In further detail, conveying device 23 may also comprise one or more rotatable axles 28, the endless chain being preferentially operatively coupled to rotatable axles 28. Preferentially, conveying device 23 comprises at least two rotatable axles 28 arranged at opposite ends of folding unit 20. More preferentially, one rotatable axle 28 may be arranged adjacent to inlet station 25 and the other rotatable axle 28 may be arranged adjacent to discharge station 26.

Preferentially, the actuator may be operatively connected to one of rotatable axles 28 so as to actuate rotation of the respective rotatable axle 28, which in turn leads, in use, to advancement of the endless chain (and thereby of retaining seats 22, preferentially the respective retaining elements 30, along advancement path R). Additionally, also the other rotatable axle 28 rotates being driven by the endless chain.

In other words, conveying device 23 comprises at least one active rotatable axle 28 operatively connected to the actuator and a passive rotatable axle 28.

According to some further non-limiting details, conveying device 23 may also comprise a plurality of coupling wheels 29, preferentially at least four (only two shown). Each coupling wheel 29 may be mounted to one respective rotatable axle 28 and coupling the respective rotatable axle 28 to the endless chain.

According to some preferred non-limiting embodiments, folding apparatus 11, preferentially folding unit 20, is controllable between at least an operative configuration in which folding apparatus 11, preferentially folding unit 20, is configured to manipulate semi-finalized packs 3 so as to obtain the finalized packages and a rest configuration in which operation of folding apparatus 11, preferentially folding unit 20, is interrupted and/or stopped.

Moreover, with folding apparatus 11, preferentially folding unit 20, being controlled in the operative configuration conveying device 23, preferentially the actuator, is operative and actuates advancement of retaining seats 22, preferentially the respective retaining elements 30, along advancement path R, preferentially by actuating movement of the endless chain.

Additionally, with folding apparatus 11, preferentially folding unit 20, being controlled in the rest configuration conveying device 23, preferentially the actuator, is deactivated and retaining seats 22 do not advance, preferentially as the endless chain stands still.

Advantageously, with folding apparatus 11, preferentially folding unit 20, being controlled in the rest configuration it is possible to manually actuate conveying device 23 so as to advance retaining seats 22, preferentially the respective retaining elements 30, along advancement path R. Preferentially, retaining seats 22, preferentially the respective retaining elements 30, can be manually moved along advancement path R in a forward direction or in a backward direction.

For this reason and as shown in Figures 1 to 3, folding apparatus 11, preferentially folding unit 20, comprises a hand crank 35, hand crank 35 being configured to be operatively, and preferentially removably, connected to conveying device 23, preferentially to one of rotatable axles 28, more preferentially to the active rotatable axle 28.

In particular, with hand crank 35 being connected to conveying device 23 a technical operator can manually move retaining seats 22, preferentially the respective retaining elements 30, along advancement path R, preferentially by manually rotating one of the rotatable axles 28 through hand crank 35.

Preferentially, hand crank 35 is configured to be disconnected from conveying device 23 while folding apparatus 11, preferentially folding unit 20, is controlled in the operative configuration.

The possibility of manually advancing retaining seats 22, preferentially the respective retaining elements 30, may be of importance during maintenance work and/or a format change.

In more detail and with particular reference to Figures 2 to 5, hand crank 35 comprises:
- a connecting shaft 36 configured to be operatively connected to conveying device 23, being rotatable about a rotation axis B and being configured to enable a manual actuation of advancement of retaining seats 22, preferentially the respective retaining elements 30, along advancement path R by rotating connecting shaft 36 about rotation axis B; and
- a gripping element 37 connected to connecting shaft 36 and configured to be gripped by a technical operator and enabling to actuate rotation of connecting shaft 36 about rotation axis B.

Preferentially, connecting shaft 36 may be configured to be coupled to one of rotatable axles 28, more preferentially the active rotatable axle 28.

According to some preferred non-limiting embodiments, connecting shaft 36 may comprise a connecting element 38, preferentially a toothed connecting element 38, configured to be connected to conveying device 23, preferentially the respective rotatable axle 28.

Preferentially, connecting shaft 36 may also comprise a main portion 39, preferentially extending along rotation axis B, carrying connecting element 38, preferentially at a respective first end portion of main portion 39.

Advantageously, main portion 39 may have a cylindrical shape.

Moreover, gripping element 37 may be connected to main portion 39, preferentially at a second end portion of main portion 39 opposite to the first end portion of main portion 39.

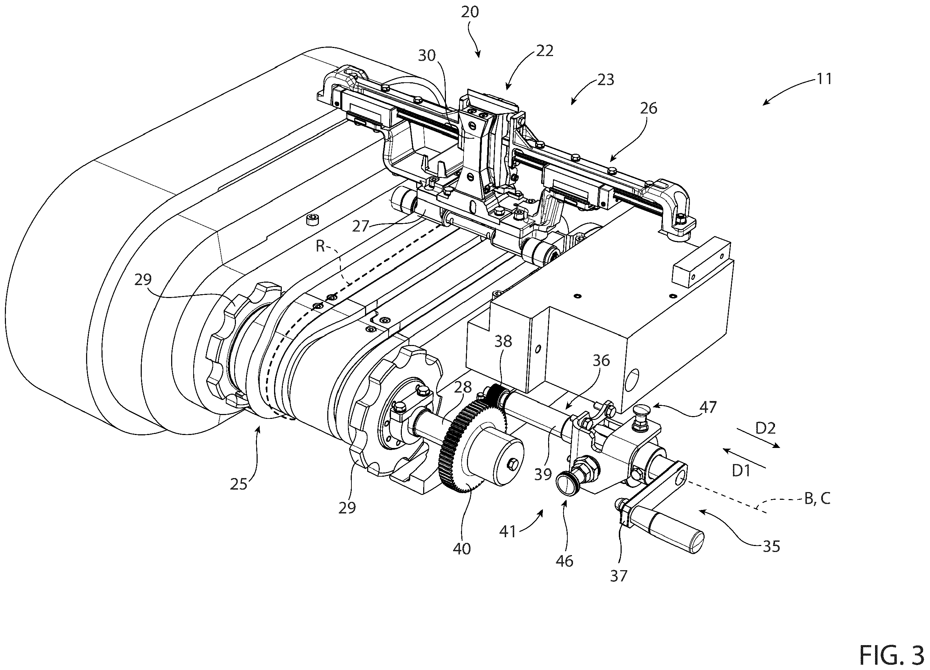

With particular reference to Figure 3, conveying device 23 may comprise a connecting wheel 40, preferentially a toothed connecting wheel 40, and connecting shaft 36, preferentially connecting element 38, is configured to be connected to connecting wheel 40 so as to connect hand crank 35, preferentially connecting shaft 36, to connecting wheel 40.

More specifically, connecting wheel 40 is mounted to the respective rotatable axle 28, preferentially the active rotatable axle 28.

Moreover, with connecting shaft 36 being connected to conveying device 23, connecting element 38 engages connecting wheel 40 so that a rotation of connecting shaft 36 about rotation axis B actuates a rotation of connecting wheel 40 about an auxiliary actuation axis, which in turn leads to advancement of the retaining elements 30 along the advancement path R, in particular as rotation of connecting wheel 40 results also in rotation of rotatable axle 28, which in turn results in advancement of the endless chain and therewith of retaining elements 30.

According to some preferred non-limiting embodiments, folding apparatus 11, preferentially folding unit 20, may comprise a seat for hosting hand crank 35 when being connected to conveying device 23, and preferentially also an auxiliary seat for hosting hand crank 35 when being disconnected from conveying device 23.

In particular, when connecting and disconnecting hand crank 35 to conveying device 23, hand crank 35 is moved by a technical operator along, respectively, a first direction D1 and a second direction D2 opposed to first direction D1.

Advantageously, folding apparatus 11, preferentially folding unit 20, comprises a safety device 41 configured to:
- guarantee that with hand crank 35 being connected to conveying device 23 retaining seats 22, preferentially the respective retaining elements 30, can advance only in a controlled manner; and/or
- guarantee that hand crank 35 can be disconnected from conveying device 23 only in controlled manner.

Preferentially, portions of safety device 41 are part of hand crank 35, while other portions of safety device 41 are mounted to a housing 42 of folding apparatus 11, preferentially folding unit 20.

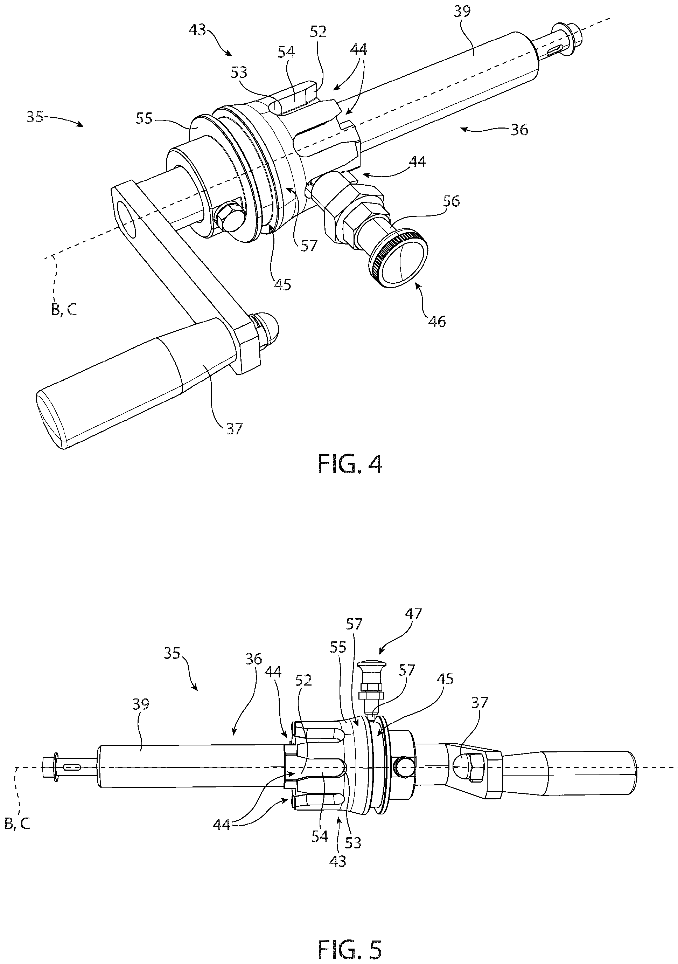

With particular reference to Figures 4 and 5, hand crank 35 may also comprise a safety element 43 fixed to connecting shaft 36. In particular, safety element 43 is fixed to connecting shaft 36 such that a rotation of connecting shaft 36 about rotation axis B also results in a rotation of safety element 43.

As will be explained in further detail further below, safety element 43 is designed to block a rotation of control shaft 36 about rotation axis B and/or is designed to prevent the possibility to disconnect hand crank 35 from conveying device 23 with hand crank 35 being connected to conveying device 23.

With particular reference to Figures 2 to 5, safety device 41 may comprise safety element 43 having one or more indentations 44 and/or at least one auxiliary indentation 45.

Additionally, folding apparatus 11, preferentially folding unit 20, comprises a safety member 46, preferentially a safety pin, configured to engage into one of the one or more indentations 44 and/or an auxiliary safety member 47, preferentially an auxiliary safety pin, configured to engage into the at least one auxiliary indentation 45.

In more detail, each indentation 44 is configured to receive safety member 46 such that with safety member 46 being inserted into one of the one or more indentations 44 rotation of connecting shaft 36 about rotation axis B is blocked.

Moreover, safety member 46 may be movable between:
- an active position (see Figures 1 to 4) in which safety member 46 is configured to engage and/or engages into a respective indentation 44 so as to impede rotation of connecting shaft 36 about rotation axis B; and
- a rest position in which safety member is configured to be retraced from the respective indentation 44 so as to allow rotation of connecting shaft 36 about rotation axis B, in particular by a technical operator operating with gripping element 37.

In this way, one guarantees that advancement of retaining seats 22, preferentially of the respective retaining elements 30, occurs only if wanted and no unforeseen events may lead to an undesired advancement of retaining seats 22, preferentially of the respective retaining elements 30. Additionally, it is possible to manually advance retaining seats 22, preferentially the respective retaining elements 30, only after disengaging safety member 46 from the respective indentation 44.

Preferentially, safety device 41 may comprise safety member 46 and/or safety member 47.

According to some preferred non-limiting embodiments, safety member 46 and/or safety member 47 may be mounted to housing 42.

Preferentially, housing 42 may comprise a support for safety member 46 and/or safety member 47.

In further detail and with particular reference to Figures 4 and 5, safety element 43 may comprise a plurality of indentations 44. Such a solution guarantees that safety member 46 engages into one indentation 44 or in other words can be controlled into the active position. In particular, it may occur in rare cases that the angular position of safety element 43 may be such that safety member 46 cannot engage into indentation 44. However, if this occurs a small rotation of safety element 43 leads to safety member 46 to engage into one indentation 44, thereby preventing the possibility of significant and undesired advancements of retaining seats 22, preferentially of the respective retaining elements 30.

According to some preferred non-limiting embodiments, each indentation 44 may be realized in the form of a(n) (elongated) groove. Preferentially, each groove may have an extension parallel to connecting shaft 36, preferentially main portion 39, and/or rotation axis B.

By providing indentations 44 in the form of respective grooves, it is possible to facilitate engagement of safety member 46 into one indentation 44 during a step of connecting shaft 36 to conveying device 23.

Moreover, each groove may comprise an open end portion 52, a closed end portion 53 opposite to the respective open end portion 52 and a main portion 54 interposed between the respective open end portion 52 and the respective closed end portion 53.

Preferentially, each open end portion 52 and each closed end portion 53 may be connected to main portion 54.

According to some preferred non-limiting embodiments, each open end portion 52 may taper towards the respective main portion 54. Such an embodiment, further facilitates the engagement of safety member 46 into one indentation 44.

According to some preferred non-limiting embodiments, each open end portion 52 may face the first end portion of main portion 39 and/or each open end portion 52 may be closer to the first end portion of main portion 39 than the respective closed end portion 53.

In further detail and with particular reference to Figures 4 and 5, safety element 43 may have an annular ring 55, preferentially having a central axis C, carrying the one or more indentations 44.

Preferentially, annular ring 55 may be mounted onto connecting shaft 36, more preferentially onto main portion 39. More specifically, annular ring 55 may surround connecting shaft 36, preferentially main portion 39.

Even more preferentially, annular ring 55 may be coaxially mounted onto main portion 39 and/or central axis C may be coaxial with rotation axis B.

According to some preferred non-limiting embodiments, indentations 44 may be equally spaced apart from one another about central axis C.

Preferentially, indentations 44 may equal one another.

According to some preferred non-limiting embodiments and with particular reference to Figure 2 to 5, safety member 46 may be biased into the active position, in particular such that the technical operator must actively move safety member 46 from the active position to the rest position if the technical operator wants to manually advance retaining seats 22 along advancement path R.

In further detail, safety member 46 may comprise a movable pin 56 movable between the active position and the rest position, and an elastic biasing element, such as a spring, operatively coupled to movable pin 56 so as to bias movable pin 56 into the active position.

It should be noted that by having indentations 44 in the form of grooves, preferentially spaced apart from one another about central axis C, even more preferentially equally spaced apart from one another about central axis C, movable pin 56 usually immediately engages one of indentations 44, so that rotation of connecting shaft 36 becomes blocked, as soon as connecting shaft 36 is connected to conveying device 23. However, it may occur that when connecting shaft 36 is connected to conveying device 23, due to the specific angular position of safety element 43, movable pin 56 may hit a portion of safety element 43 being interposed between two respective grooves. If such a situation occurs, movable pin 56 is arranged in the rest position, but as soon as a minor rotation of connecting shaft 36 occurs, movable pin 56 immediately snaps into one groove so as to block rotation of connecting shaft 36.

Moreover, when, in use, the technical operator wants to manually advance retaining seats 22, preferentially the respective retaining elements 30, the technical operator needs to keep one hand occupied with controlling safety member 46 in the rest position and the other hand occupied at gripping element 37.

With particular reference to Figures 2 to 5, auxiliary safety member 47 may be movable between an operative position (see Figures 2 to 5) and an idle position.

When connecting shaft 36 is connected to conveying device 23 and auxiliary safety member 47 engages into auxiliary indentation 45, auxiliary safety member 47 is arranged in the operative position so as to block any unwanted disconnection of connecting shaft 36 from conveying device 23 from conveying device 23, preferentially the respective rotatable axle 28, more preferentially connecting wheel 40.

Moreover, when connecting shaft 36 is connected to conveying device 23 and auxiliary safety member 47 is retracted from auxiliary indentation 45, auxiliary safety member 47 is in the idle position, so as to allow to disconnection of connecting shaft 36 from conveying device 23.

According to some preferred non-limiting embodiments, auxiliary safety member 47 may be biased into the operative position.

In further detail, auxiliary safety member 47 may comprise a movable auxiliary pin 57 movable between the operative position and the idle position, and an elastic auxiliary biasing element, such as a spring, operatively coupled to movable auxiliary pin 57 so as to bias movable auxiliary pin 57 into the idle position. Preferentially, a technical operator needs to apply a counterforce on movable auxiliary pin 57 so as to move the movable auxiliary pin 57 to the idle position.

In other words, auxiliary indentation 45 may be configured to receive auxiliary safety member 47, preferentially auxiliary pin 57, such that with auxiliary safety member 47 being inserted into auxiliary indentation 45 disconnection of connecting shaft 36 from conveying device 23 is impeded. Moreover, auxiliary safety member 47 needs to be removed from auxiliary indentation 45 so that connecting shaft 36 can be disconnected from conveying device 23.

With particular reference to Figures 4 and 5, auxiliary indentation 45 may be provided in the form of an annular groove. Such a solution provides in an easy manner the possibility to guarantee that connecting shaft 36 remains connected to conveying device 23 and, at the same time, to allow the rotation of connecting shaft 36 about rotation axis B.

Preferentially, auxiliary indentation 45, preferentially the annular groove, may be coaxial to central axis C and/or rotation axis B and/or may be transversal, preferentially perpendicular to, indentations 44.

According to some preferred non-limiting embodiments, safety element 43 may also comprise a transition surface 57 configured to move auxiliary safety member 47 from the operative position towards the idle position during a step of connecting connecting shaft 36 to conveying device 23 and until auxiliary safety member engages into auxiliary indentation 45.

Preferentially, transition surface 57 may be interposed between indentations 44 and auxiliary indentation 47.

In use, packaging machine 1 forms the finalized packages filled with the pourable product.

In particular, the method of forming the packages comprises the main steps of:
- forming semi-finalized packs 3 by operation of forming apparatus 10; and
- folding semi-finalized packs 3 into the finalized packages by operation of folding apparatus 11.

In more detail, the main step of forming packs 3, comprises at least the steps of:
- advancing web of packaging material 2 along advancement path P, in particular by operation of conveying unit 13;
- folding web of packaging material 2 into tube 14, in particular within isolation chamber 12, by operation of tube forming and sealing device 15;

- longitudinally sealing tube 14, in particular within isolation chamber 12, by operation of tube forming and sealing device 15;
- filling tube 14 with the pourable product by operation of filling device 16;
- advancing tube 14 along tube advancement path Q by operation of conveying unit 13 and/or the pack forming unit; and
- obtaining semi-finalized packs 3 from tube 14 by forming, transversally sealing and transversally cutting tube 14 by operation of the pack forming unit and during advancement of tube 14 along tube advancement path Q.

Moreover, the step of forming may also comprise the step of sterilizing web of packaging material 2 at the sterilization station.

In more detail, the step of folding semi-finalized packs 3 comprises the sub-steps of:
- feeding semi-finalized packs 3 to folding unit 20 by operation of infeed conveyor 21; and
- final folding semi-finalized packs 3 by operation of folding unit 20.

More specifically, during the sub-step of feeding, semi-finalized packs 3 may be fed into respective retaining seats 22, preferentially into a space defined between the respective retaining elements 30.

Moreover, during the step of final folding, retaining seats 22, preferentially the respective retaining elements 30, are advanced by operation of conveying device 23, preferentially when folding apparatus 11, preferentially folding unit 20, is in the operative configuration, along advancement path R and treatment device 24 manipulate semi-finalized packs 3 so as to obtain the finalized packages.

If needed (e.g. for executing a maintenance and/or a format change), folding apparatus 11, preferentially folding unit 20, can be controlled in the rest configuration.

Then a technical operator can connect hand crank 35, preferentially connecting shaft 36, to conveying device 23, preferentially the respective rotatable axle 28, more preferentially connecting wheel 40. Preferentially, the technical operator moves hand crank 35 along the first direction D1.

After connecting hand crank 35, in particular connecting shaft 36, to conveying device 23, rotation of connecting shaft 36 is impeded by safety member 46 engaging into one indentation 44. Therefore, in order to allow rotation of connecting shaft 36 the technical operator needs to disengage safety member 46 from the respective indentation 44. More precisely, the technical operator needs to move safety member 46 from the active position to the rest position and to keep the safety member 46 in the rest position.

Additionally, after connecting hand crank 35, in particular connecting shaft 36, to conveying device 23, disconnection of hand crank 35 from conveying device 23 is impeded as auxiliary safety member 47 engages into auxiliary indentation 45. Therefore, in order to allow disconnection of connecting shaft 36 from conveying device 23 the technical operator needs to disengage auxiliary safety member 47 from auxiliary indentation 45. More precisely, the technical operator needs to move auxiliary safety member 47 from the operative position to the idle position.

The advantages of hand crank 35 and/or folding apparatus 11, preferentially folding unit 20, according to the present invention will be clear from the foregoing description.

In particular, hand crank 35 gives the possibility of blocking any unwanted advancement of retaining seats 22.

Additionally, hand crank 35 guarantees that no unwanted disconnection of connecting shaft 36 from conveying device 23 may occur.

Clearly, changes may be made to hand crank 35 and/or folding apparatus 11 and/or packaging machine 1 as described herein without, however, departing from the scope of protection as defined in the accompanying claims.

## Claims

1. Hand crank (35) for a folding apparatus (11) configured for producing finalized packages from semi-finalized packs (3) filled with a pourable product and comprising a plurality of retaining seats (22) for retaining respective semi-finalized packs (3) and a conveying device (23) configured to advance the retaining seats (22) along an advancement path (R);
wherein the hand crank (35) is configured to be operatively connected to the conveying device (23) of the folding apparatus (11) so as to enable a manual actuation of advancement of the retaining seats (22) along the advancement path (R);
wherein the hand crank (35) comprises:
- a connecting shaft (36) configured to be operatively connected to the conveying device (23), being rotatable about a rotation axis (B) and being configured to enable the manual actuation of the advancement of the retaining seats (22) along the advancement path (R) by rotating the connecting shaft (36) about the rotation axis (B);
- a gripping element (37) connected to the connecting shaft (36) and configured to be gripped by a technical operator and enabling to actuate rotation of the connecting shaft (36) about the rotation axis (B); and
- a safety element (43) fixed to the connecting shaft (36) and having one or more indentations (44);
wherein each indentation (44) is configured to receive a safety member (46) of the folding apparatus (11) and such that with the safety member (46) being inserted into one of the indentations (44) rotation of the connecting shaft (36) about the rotation axis (B) is blocked.

2. Hand crank according to claim 1, wherein each indentation (44) is realized in the form of a groove.

3. Hand crank according to claim 2, wherein each groove comprises an open end portion (52), a closed end portion (53) opposite to the open end portion (52) and a main portion (54) interposed between the open end portion (52) and the closed end portion (53);
wherein the open end portion (52) tapers towards the main portion (54).

4. Hand crank according to any one of the preceding claims, wherein the safety element (43) has an annular ring (55) mounted to the connecting shaft (36) and carrying the one or more indentations (44).

5. Hand crank according to claim 4, wherein the annular ring (55) has a central axis (C);
wherein the safety element (43) comprises a plurality of indentations (44) equally spaced apart from one another about the central axis (C).

6. Hand crank according to claim 5, wherein the central axis (C) is coaxial to the rotation axis (B).

7. Hand crank according to any one of the preceding claims, wherein the safety element (43) further comprises an auxiliary indentation (45) configured to receive an auxiliary safety member (47) of the folding apparatus (11) and such that with the auxiliary safety member (47) being inserted into the auxiliary indentation (45) disconnection of the connecting shaft (36) from the conveying device (23) is impeded.

8. Hand crank according to claim 7, wherein the auxiliary indentation (45) is provided in the form of an annular groove.

9. Folding apparatus (11) for producing finalized packages from semi-finalized packs (5) filled with a pourable product;
the folding apparatus (11) comprises at least:
- a plurality of retaining elements (22) configured to receive respective semi-finalized packs (3); and
- a conveying device (23) configured to advance the retaining seats (22) along an advancement path (R);
the folding apparatus (11) also comprises:
- a hand crank (35) according to any one of the preceding claims;
wherein the safety member (46) is movable between an active position in which the safety member (46) engages into one of the indentations (44) so as to impede rotation of the connecting shaft (36) about the rotation axis (B) and a rest position in which the safety member (46) is retraced from the indentation (44) so as to allow rotation of the connecting shaft (36) about the rotation axis (B).

10. Folding apparatus according to claim 9, wherein the safety member (46) is biased into the active position.

11. Folding apparatus according to claim 9 or 10, the safety element (43) further comprises an auxiliary indentation (45);
wherein the folding apparatus (11) further comprises an auxiliary safety member (47) movable between an operative position and an idle position;
wherein when the connecting shaft (36) is connected to the conveying device (23) and the auxiliary safety member (47) is in the operative position, the auxiliary safety member (47) engages into the auxiliary indentation (45) and impedes disconnection of the connecting shaft (36) from the conveying device (23); and
wherein when the connecting shaft (36) is connected to the conveying device (23) and with the auxiliary safety member (47) being in the idle position, the auxiliary safety member (47) is positioned such to allow disconnection the connecting shaft (36) from the conveying device (23).

12. Folding apparatus according to any one of claims 9 to 11, wherein the auxiliary safety member (47) is biased into the operative position.

13. Folding apparatus according to claim 11 or 12, wherein the safety element (43) comprises a transition surface (57) configured to move the auxiliary safety member (47) from the operative position towards the idle position during a step of connecting the connecting shaft (36) to the conveying device (23) and until the auxiliary safety member (47) is aligned with the auxiliary indentation (45).

14. Folding apparatus according to any one of claims 9 to 13, wherein the conveying device (23) comprises a connecting wheel (40) and the connecting shaft (36) comprises a connecting element (38);
wherein the connecting element (38) engages the connecting wheel (40) with the connecting shaft (36) being connected to the conveying device (23) and such that a rotation of the connecting shaft (36) about the rotation axis (B) actuates a rotation of the connecting wheel (40) about an auxiliary actuation axis, which in turn leads to advancement of the retaining seats (22) along the advancement path (R); and/or
the conveying device (23) comprises an endless chain having a plurality of chain elements (27);
wherein each retaining seat (22) is defined by a couple of retaining elements (30), each retaining element (30) being mounted onto one respective chain element (27).

15. Packaging machine (1) for producing finalized packages of a pourable product comprising at least:
- a forming apparatus (10) configured to form semi-finalized packs (3) of the pourable product; and
- a folding apparatus (11) according to any one of claims 9 to 14 for forming the finalized packages from the semi-finalized packs (3).
